# EUROPEAN PATENT APPLICATION

(11) **EP 4 484 228 A1**
(43) Date of publication of application: **01.01.2025**
(21) Application number: 23759007.0
(22) Date of filing: 07.02.2023
(51) Int. Cl.: B60R 22/24, B60R 22/20

(54) **SAFETY BELT SLIDING ASSEMBLY AND VEHICLE**

(30) Priority: 23.02.2022 CN 202220373648 U
(71) Applicant: Beijing Chehejia Automobile Technology Co., Ltd., Beijing 101300 (CN)
(72) Inventor: LI, Dongyan, Beijing 101300 (CN); LIU, Xing, Beijing 101300 (CN)
(74) Representative: Maiwald GmbH
(86) International application number: PCT/CN2023/074812
(87) International publication number: WO 2023/160382

(57) **Abstract**

A safety belt sliding assembly, comprising an upper decorative plate (10) and a sliding plate (20), wherein the upper decorative plate is provided with a first surface (11), the first surface (11) is provided with a first guide rail and a second guide rail (13) connected to each other, and the second guide rail is inclined to be away from the first surface (11) in a direction away from the first guide rail; and the sliding plate (20) comprises a fixed section (21) and a flexible section (22) which are connected to each other, the fixed section (21) and the flexible section (22) respectively being in sliding fit with the first guide rail, and the flexible section (22) being capable of sliding to the second guide rail and generating deformation. According to the configuration, the structural space is increased; in addition, an appearance surface difference is reduced, the appearance quality is improved, and the degree of freedom of design is improved. Further disclosed is a vehicle comprising the safety belt sliding assembly.

## Description

### CROSS-REFERENCE TO RELATED APPLICATION

This application claims priority to Chinese Patent Application No. 202220373648.3, filed on February 23, 2022, the entire content of which is incorporated herein by reference.

### FIELD

The present disclosure relates to the field of vehicles, and more particularly to a safety belt sliding assembly and a vehicle.

### BACKGROUND

A safety belt sliding plate is fixed to a back of an upper decorative plate by snapping or other means, and the safety belt sliding plate can slide up and down relative to the upper decorative plate. The movement trajectory of the traditional safety belt sliding plate relative to the upper decorative plate is fixed. For such sliding plate with the fixed trajectory, when the sliding plate is at an upper limit position, a lower boundary of the sliding plate is higher than a parting between the upper decorative plate and a lower decorative plate/side wall; and when the sliding plate is at a lower limit position, the lower boundary of the sliding plate will be lower than the parting between the upper decorative plate and the lower decorative plate/side wall.

When the upper decorative plate is butted with the lower decorative plate or the side wall, the two structures partially overlap at a butt joint, and a thickness of the overlapping part is larger than a thickness of a non-overlapping part. Thus, in order to avoid the interference between the sliding plate and the overlapping part, there is a large distance between the sliding plate and the overlapping part, and accordingly, there also is a large distance between the sliding plate and the non-overlapping part of the upper decorative plate. A limitation of this structural space will cause a surface difference of the sliding plate and the upper decorative plate to be large, thus affecting the appearance quality.

### SUMMARY

In view of the above problems, embodiments of the present disclosure are proposed to provide a safety belt sliding assembly and a vehicle that solve the above problems.

On the one hand, an embodiment of the present disclosure provides a safety belt sliding assembly, which includes: an upper decorative plate having a first surface, in which the first surface is provided with a first guide rail and a second guide rail connected to each other, and the second guide rail is inclined in a direction running away from the first guide rail and in a direction facing away from the first surface; and a sliding plate including a fixed section and a flexible section connected to each other, the fixed section and the flexible section being slidably fitted with the first guide rail, respectively, and the flexible section being configured to slide to the second guide rail and generate deformation.

In some embodiments of the present disclosure, the flexible section includes a reinforcing skeleton and a flexible layer connected to each other.

In some embodiments of the present disclosure, the reinforcing skeleton is embedded inside the flexible layer.

In some embodiments of the present disclosure, the reinforcing skeleton is bonded with the flexible layer; or, the flexible layer is a soft rubber layer, and the reinforcing skeleton is integrated with the flexible layer by injection molding.

In some embodiments of the present disclosure, the reinforcing skeleton includes a plurality of reinforcing ribs arranged at intervals along a sliding direction of the sliding plate.

In some embodiments of the present disclosure, the flexible section has a first side surface, the first side surface faces away from or faces the first surface, and the first side surface is provided with a deforming groove.

In some embodiments of the present disclosure, the first side surface is provided with a plurality of deforming grooves, the plurality of deforming grooves are distributed at intervals along the sliding direction of the sliding plate, a convex portion is formed between adjacent two deforming grooves, the reinforcing ribs of the flexible section are arranged corresponding to the convex portions, and each reinforcing rib corresponds to one convex portion.

In some embodiments of the present disclosure, the second guide rail is an arc-shaped guide rail.

In some embodiments of the present disclosure, the upper decorative plate has a second surface facing away from the first surface; and the safety belt sliding assembly further includes a lower decorative plate arranged on the second surface, the upper decorative plate has an overlapping area overlapping with the lower decorative plate, the first guide rail is arranged outside the overlapping area, and the second guide rail is arranged in the overlapping area.

On the one hand, an embodiment of the present disclosure further provides a vehicle, which includes a safety belt sliding assembly, and the safety belt sliding assembly includes: an upper decorative plate having a first surface, in which the first surface is provided with a first guide rail and a second guide rail connected to each other, and the second guide rail is inclined in a direction running away from the first guide rail and in a direction facing away from the first surface; and a sliding plate including a fixed section and a flexible section connected to each other, the fixed section and the flexible section being slidably fitted with the first guide rail, respectively, and the flexible section being configured to slide to the second guide rail and generate deformation.

In the technical solutions provided by the embodiments of the present disclosure, the sliding plate is provided with the flexible section, which can achieve flexible deformation. When a lower end of the sliding plate, i.e. the flexible section, slides to the inclined second guide rail, by the deformation of the flexible section itself, it is capable of adapting to switching from the first guide rail to the relatively inclined second guide rail and sliding, thus achieving the change in the movement trajectory of the safety belt sliding plate. When the flexible section slides on the second guide rail in the direction running away from the first guide rail, the flexible section is gradually inclined inwards relative to the first surface of the upper decorative plate, i.e. moving away from the first surface. This can avoid interference between the flexible section and the first surface and other structures arranged on the first surface, thus ensuring the smooth sliding of the flexible section. The inclined second guide rail and the flexible section of the sliding plate are fitted with each other, which can increase the structural space for the sliding of the sliding plate, reduce the appearance surface difference, improve the appearance quality, and increase the design freedom.

### BRIEF DESCRIPTION OF THE DRAWINGS

In order to more clearly explain the technical solution of embodiments of the present disclosure or the related art, the drawings required to be used in the description of embodiments or the related art will be briefly described below. Obviously, the drawings described below are some embodiments of the embodiments of the present disclosure, and for those ordinary skilled in the art, other drawings can be obtained according to these drawings without creative labor.
Fig. 1 is a schematic view of a traditional safety belt sliding assembly viewed from the inside, in which a sliding plate is at an upper limit position.
Fig. 2 is a schematic view of a traditional safety belt sliding assembly viewed from the inside, in which a sliding plate is at a lower limit position.
Fig. 3 is a sectional view of a traditional safety belt sliding assembly taken along A-A in Fig. 1, in which a solid line indicates that a sliding plate is at a lower limit position, and a dashed line indicates that a sliding plate is at an upper limit position.
Fig. 4 is a schematic view of a traditional safety belt sliding assembly viewed from the outside.
Fig. 5 is a sectional view taken along B-B in Fig. 4.
Fig. 6 is a schematic view of a sliding plate according to an embodiment of the present disclosure.
Fig. 7 is an exploded view of a sliding plate according to an embodiment of the present disclosure.
Fig. 8 is a schematic view of a sliding plate according to an embodiment of the present disclosure viewed from another perspective.
Fig. 9 is a sectional view of a sliding plate according to an embodiment of the present disclosure.
Fig. 10 is a partial schematic view of a sliding plate and an upper decorative plate after being assembled according to an embodiment of the present disclosure.
Fig. 11 is another partial schematic view of a sliding plate and an upper decorative plate after being assembled according to an embodiment of the present disclosure.
Fig. 12 is a schematic view showing a state when a sliding plate slides to a lower limit position according to an embodiment of the present disclosure.
Fig. 13 is a partial schematic view of a safety belt sliding assembly according to an embodiment of the present disclosure viewed from the outside.
Fig. 14A is a schematic view showing the fit between the sliding plate and an upper decorative plate when a sliding plate according to an embodiment of the present disclosure slides to a lower limit position.
Fig. 14B is a schematic view showing the fit between the sliding plate and an upper decorative plate when a traditional sliding plate slides to a lower limit position.

### Reference signs:

| Sign | Name | Sign | Name | Sign | Name |
|---|---|---|---|---|---|
| 10/10' | upper decorative plate | 20/20' | sliding plate | 201 | first side surface |
| 11 | first surface | 21 | fixed section | 202 | deforming groove |
| 12 | second surface | 22 | flexible section | 203 | convex portion |
| 13 | second guide rail | 221 | reinforcing skeleton | 204 | sliding groove |
| | | 222 | flexible layer | 30/30' | lower decorative plate |

### DETAILED DESCRIPTION

In order to make the purpose, the technical solution and the advantage of embodiments of the present disclosure more clear, the technical solution in embodiments of the present disclosure will be described clearly and completely in combination with the attached drawings in embodiments of the present disclosure. Obviously, the embodiments described are part of the embodiments of the present disclosure, rather than all the embodiments of the present disclosure. Based on the embodiments of the present disclosure, all other embodiments obtained by those skilled in the art without creative work fall within the protection scope of the embodiments of the present disclosure.

It should be noted that in the description of the present disclosure, if the terms "first", "second" or the like appear, the terms "first" and "second" are only used to facilitate the description of different components or names, and cannot be understood as indicating or implying sequential relationships, relative importance or implicitly indicating the number of indicated technical features. Therefore, the feature defined as "first" or "second" may explicitly or implicitly include at least one such feature. In addition, if "and/or" appears in the whole text, it means that it includes three parallel solutions, taking "A and/or B" as an example, including solution A, solution B, or a solution that both solution A and solution B are met.

Unless otherwise defined, all technical terms and scientific terms used herein have the same meaning generally understood by those skilled in the art to which the present disclosure belongs. The terms used herein in the description of the present disclosure are only for the purpose of describing specific embodiments and are not intended to limit the present disclosure.

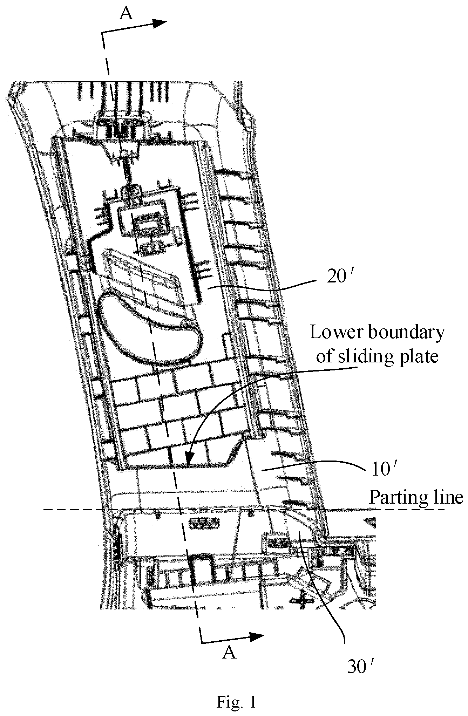

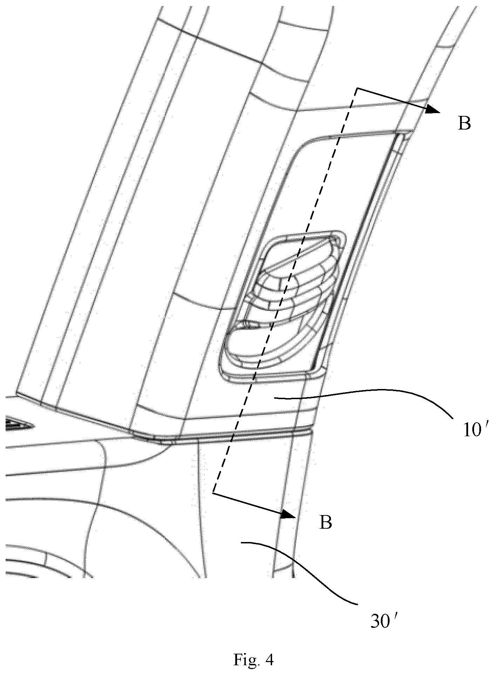

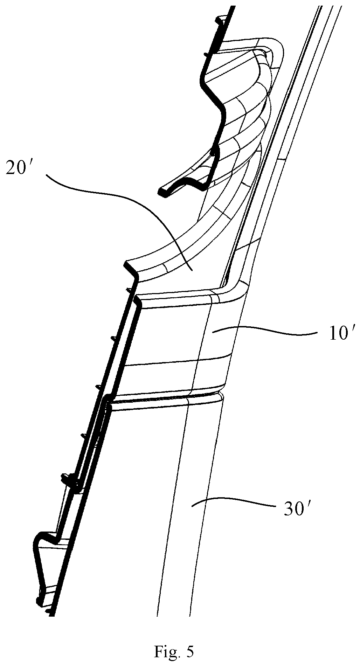

As shown in Figs. 1 to 5, the inventor finds in practice that there is a significant surface difference between a safety belt sliding plate 20' and an upper decorative plate 10' in a vehicle, resulting in poor appearance quality.

The reason is that, the upper decorative plate 10' needs to be butted with other structures such as a lower decorative plate 30' or a side wall, and the two structures partially overlap at a butt joint. Taking the butting of the upper decorative plate 10' and the lower decorative plate 30' as an example, the lower decorative plate 30' is stacked with the upper decorative plate 10', is arranged on an outer side surface of the upper decorative plate 10', and is arranged adjacent to a lower end of the upper decorative plate 10', so that an upper end of the lower decorative plate 30' and the lower end of the upper decorative plate 10' overlap in an inner-outer direction, and an upper end face of the lower decorative plate 30' serves as a parting line of the two. Moreover, in this overlapping part, in order to ensure that the upper decorative plate 10' and the lower decorative plate 30' are connected to each other, some connecting structures will be arranged between the two, which will also occupy some space.

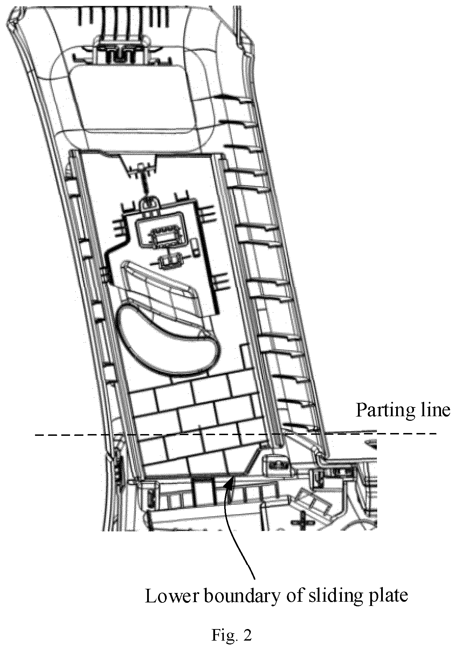

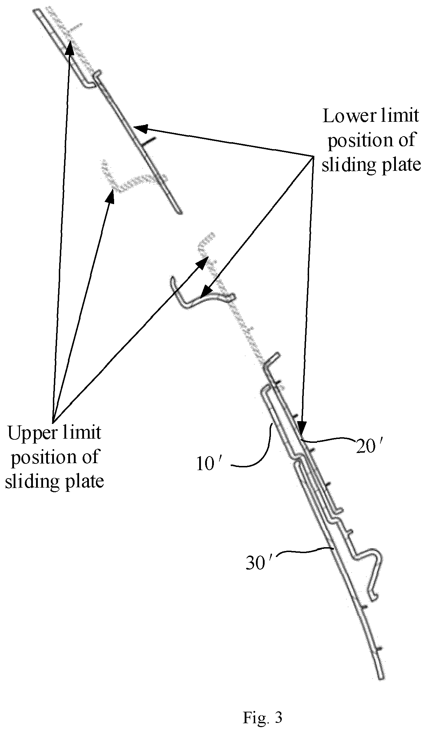

An upper limit position of the safety belt sliding plate 20' is shown in Fig. 1. It can be seen from Fig. 1 that when the safety belt sliding plate 20' is at the upper limit position, a lower boundary of the sliding plate 20' is located above the parting line. A lower limit position of the safety belt sliding plate 20' is shown in Fig. 2. It can be seen from Fig. 2 that when the safety belt sliding plate 20' is at the lower limit position, the lower boundary of the sliding plate 20' is located below the parting line. Fig. 3 is a sectional view of the safety belt sliding plate 20' at the upper limit position and at the lower limit position taken along A-A in Fig. 1. A solid line indicates the lower limit position, and a dashed line indicates the upper limit position. It can be seen from Fig. 3 that trajectories of the sliding plate 20' at the upper limit position and the lower limit position are on the same plane. For such sliding plate 20' with a fixed trajectory, when the lower boundary of the sliding plate 20' is lower than the parting line at the lower limit position, due to limitation of the structural space, in order to avoid interference between the sliding plate 20' and the overlapping part and the connecting structure, the sliding plate 20' needs to be arranged inwards relative to an inner surface of the upper decorative plate 10', which will result in a large surface difference between the sliding plate 20' and the upper decorative plate 10', thus affecting the appearance quality.

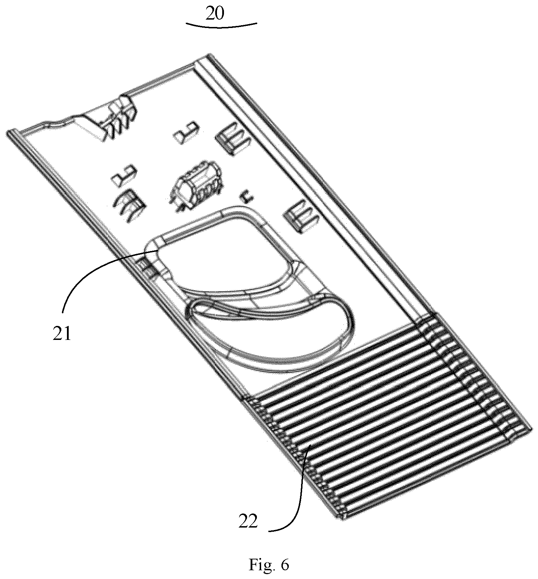

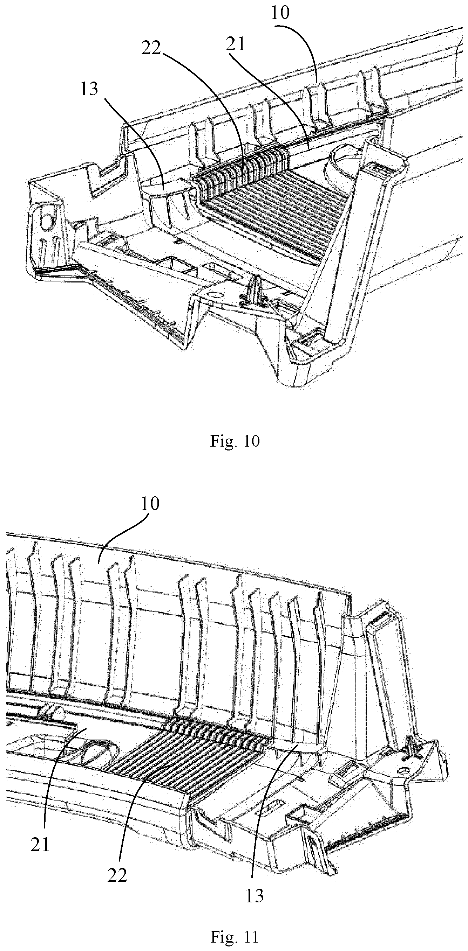

Referring to Figs. 6 to 13, for the above problem, an embodiment of the present disclosure provides a safety belt sliding assembly, which can effectively reduce the surface difference between a sliding plate 20 and an upper decorative plate 10.

The embodiment of the present disclosure provides the safety belt sliding assembly, which includes the upper decorative plate 10 and the sliding plate 20.

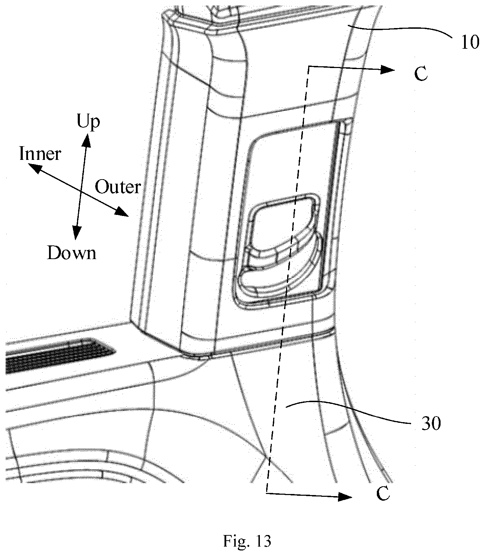

The upper decorative plate 10 has a first surface 11 and a second surface 12 facing away from each other, the first surface 11 is provided with a first guide rail (not shown in the drawings) and a second guide rail 13 connected to each other, and the second guide rail 13 is inclined in a direction running away from the first guide rail and in a direction facing away from the first surface 11. For example, taking the orientation in Fig. 13 as an example, the first surface 11 is an inner surface, and the second surface 12 is an outer surface. The first guide rail and the second guide rail 13 extend in an up-down direction, a lower end of the first guide rail is connected to an upper end of the second guide rail 13, the second guide rail 13 is inclined inwards from top to bottom, the upper end of the second guide rail 13 is adjacent to the first surface 11, and a lower end of the second guide rail 13 is away from the first surface 11.

Referring to Figs. 6 to 8, the sliding plate 20 includes a fixed section 21 and a flexible section 22 connected to each other. The fixed section 21 and the flexible section 22 are slidably fitted with the first guide rail, respectively, and the flexible section 22 is capable of sliding to the second guide rail 13 and generating deformation. Taking the orientation in the drawings as an example, a lower end of the fixed section 21 is connected to an upper end of the flexible section 22.

In the embodiment of the present disclosure, the sliding plate 20 is provided with the flexible section 22, which can achieve flexible deformation. When a lower end of the sliding plate 20, i.e. the flexible section 22, slides to the inclined second guide rail 13, by the deformation of the flexible section 22 itself, it is capable of adapting to switching from the first guide rail to the relatively inclined second guide rail 13 and sliding, thus achieving the change in the movement trajectory of the safety belt sliding plate 20. When the flexible section 22 slides on the second guide rail 13 in the direction running away from the first guide rail, the flexible section 22 is gradually inclined inwards relative to the first surface 11 of the upper decorative plate 10, i.e. moving away from the first surface 11. This can avoid interference between the flexible section 22 and the first surface 11 and other structures arranged on the first surface 11, thus ensuring the smooth sliding of the flexible section 22. In the technical solution in the embodiment of the present disclosure, the inclined second guide rail 13 and the flexible section 22 of the sliding plate 20 are fitted with each other, which can increase the structural space for the sliding of the sliding plate 20, reduce the appearance surface difference, improve the appearance quality, and increase the design freedom.

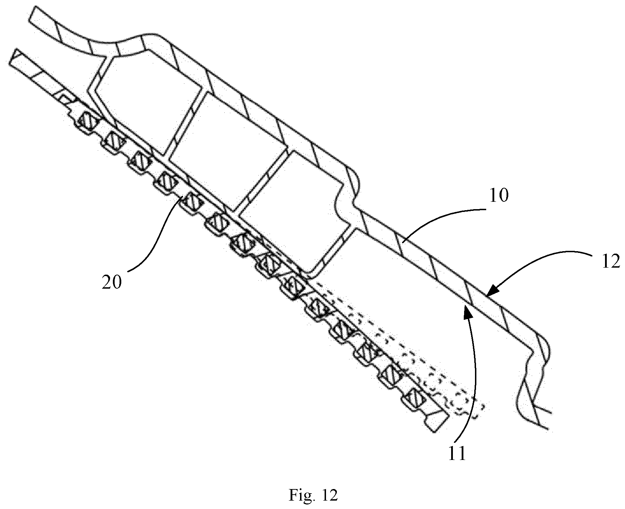

Fig. 12 is a schematic view showing a state of the sliding plate 20 when it slides to the lower limit position. A solid line in Fig. 12 represents the structure of the sliding plate 20 after the trajectory is changed, while a dashed line in Fig. 12 represents the structure of the sliding plate 20 without changing the trajectory by using a traditional guide rail. It can be seen from Fig. 12 that after the second guide rail 13 and the deformable sliding plate 20 of the present disclosure are used, when the sliding plate 20 moves to the lower limit position, the sliding plate 20 can be inclined inwards relative to the first surface 11 to avoid interference, and thus the structural space is more abundant.

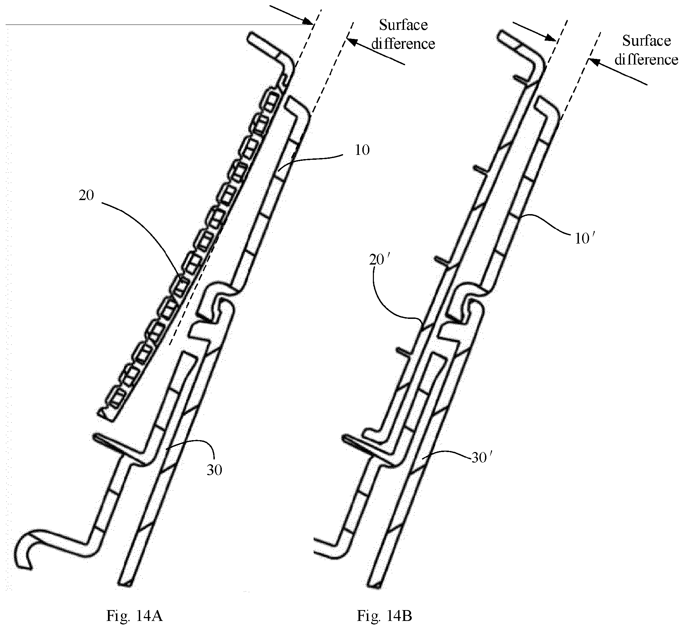

Fig. 14A is a schematic view showing the fit between the sliding plate 20 and the upper decorative plate 10 when the sliding plate 20 according to the embodiment of the present disclosure moves to the lower limit position; and Fig. 14B is a schematic view showing the fit between the sliding plate 20 and the upper decorative plate 10 when the traditional sliding plate 20 moves to the lower limit position. It can be seen from Figs. 14A and 14B that under the premise that the sliding plate 20 and the upper decorative plate 10 have the same surface difference, when the sliding plate 20 with the variable trajectory according to the present disclosure is used, the structural space is more abundant, and the design freedom can be increased.

The embodiment of the present disclosure is further described in detail in conjunction with specific implementations below.

The first guide rail may be parallel or roughly parallel to the first surface 11, and the first guide rail may be a straight track. The second guide rail 13 may also be a straight track. For example, the second guide rail 13 is an arc-shaped guide rail concave to the first surface 11 to form an arc shape. The arc-shaped second guide rail 13 is smoothly connected to the first guide rail, and thus it can guide the flexible section 22 to slide smoothly.

In some embodiments of the present disclosure, the upper decorative plate 10 adopts a plastic structure, and the first guide rail and the second guide rail 13 may be integrated with the upper decorative plate 10 by injection molding. Of course, in other embodiments, the first guide rail and the second guide rail 13 may also be separately arranged with respect to the upper decorative plate 10, respectively, and then be fixed with the upper decorative plate 10 by snapping or screw connection.

When the slide plate 20 is at the upper limit position, the sliding plate 20 is fitted with the first guide rail, that is, both the fixed section 21 and the flexible section 22 are fitted with the first guide rail; when the sliding plate 20 moves from the upper limit position to the lower limit position, the sliding plate 20 slides downwards, and the flexible section 22 gradually enters the second guide rail 13, and the fixed section 21 slides on the first guide rail all the time. Of course, in other embodiments, the fixed section 21 may also be made of a flexible material and can generate deformation, so it can slide to the second guide rail 13.

The flexible section 22 refers to a structure that can generate deformation. The materials of the flexible section 22 include, but are not limited to, soft rubber, foam, etc., and the soft rubber may be PS, ABS, AS, PVC, EVA, POE, TPES, or silicone, etc. When the trajectory of the flexible section 22 changes from the first guide rail to the second guide rail 13, the flexible section 22 generates an elastic deformation to adapt to the second guide rail 13 inclined relative to the first guide rail. When the flexible section 22 returns to the first guide rail from the second guide rail 13, the flexible section 22 may recover the elastic deformation.

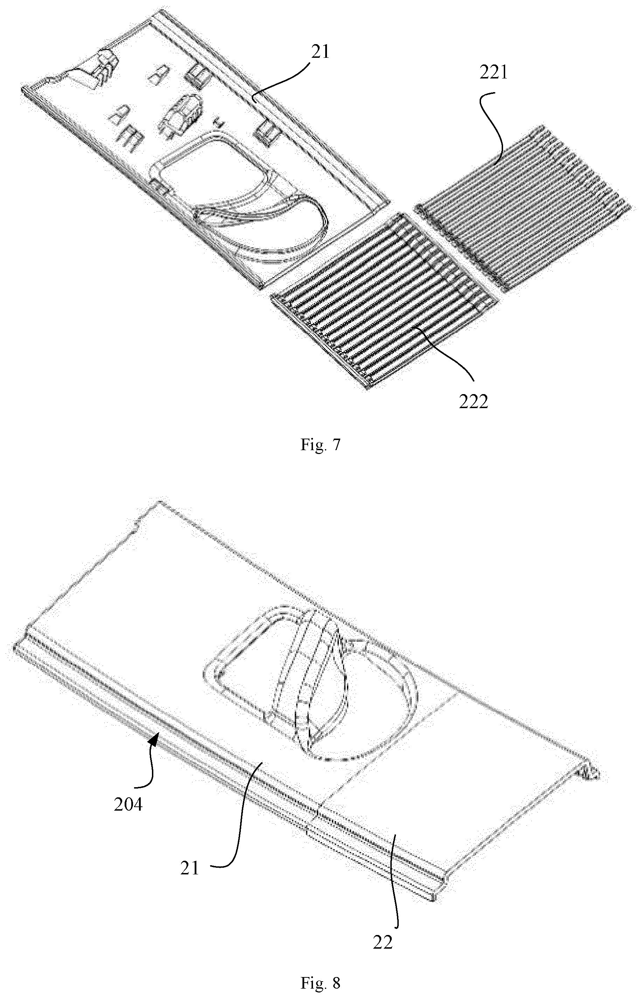

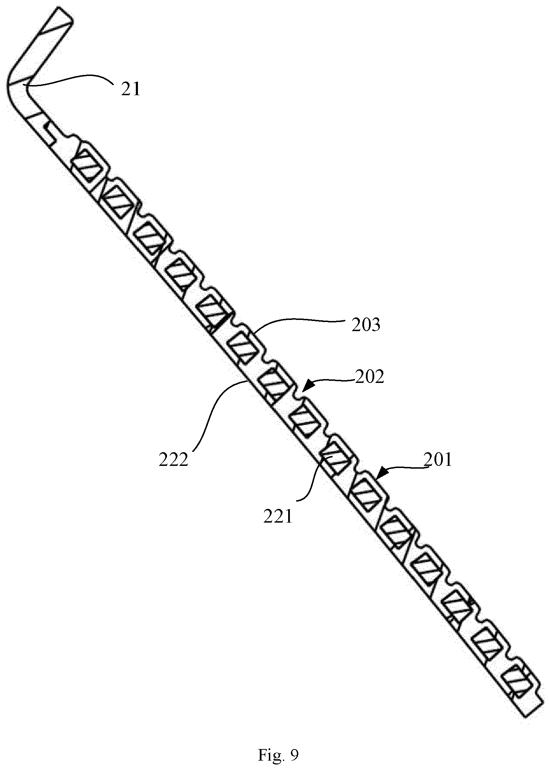

As shown in Figs. 7 and 9, the flexible section 22 may only include a flexible layer 222. Of course, in order to avoid an excessive deformation of the flexible section 22 and ensure that the flexible section 22 has a certain strength, in some embodiments of the present disclosure, the flexible section 22 includes a reinforcing skeleton 221 and the flexible layer 222 connected to each other. The flexible layer 222 can generate deformation, and the reinforcing skeleton 221 has an effect of strengthening the structure. The flexible layer 222 and the reinforcing skeleton 221 may be stacked, or the reinforcing skeleton 221 is embedded inside the flexible layer 222, so that the flexible layer 222 wraps around the reinforcing skeleton 221. For example, the reinforcing skeleton 221 is embedded inside the flexible layer 222. As a result, a surface of the flexible section 22 generates deformation, while an interior of the flexible section 22 is supported by the reinforcing skeleton 221.

There are various ways to connect the reinforcing skeleton 221 with the flexible layer 222. A possible way to fix the reinforcing skeleton 221 with the flexible layer 222 is that the reinforcing skeleton 221 is bonded with the flexible layer 222. Specifically, the reinforcing skeleton 221 and the flexible layer 222 may be bonded by a glue or a double-sided tape. The flexible section 22 may have a plurality of flexible layers 222, and the reinforcing skeleton 221 is arranged between adjacent two flexible layers 222, and thus is wrapped inside by the two flexible layers 222. Of course, in other embodiments, the reinforcing skeleton 221 may also be arranged on an outer side surface of the flexible layer 222 and exposed.

Another possible way to fix the reinforcing skeleton 221 with the flexible layer 222 is that the flexible layer 222 is a soft rubber layer, and the reinforcing skeleton 221 is integrated with the flexible layer 222 by injection molding. In this embodiment, the flexible layer 222 is injection-molded with plastic cement, and the reinforcing skeleton 221, serving as an insert, is integrated with the flexible layer 222 by injection molding. For example, the reinforcing skeleton 221 is embedded inside the flexible layer 222. The flexible layer 222 is integrated with the reinforcing skeleton 221 by injection molding, so that there is no need for installation between the flexible layer 222 and the reinforcing skeleton 221, thus avoiding fracture and detachment between the flexible layer 222 and the reinforcing skeleton 221.

The material of the reinforcing skeleton 221 includes, but is not limited to, the plastic cement or metal. The shape of the reinforcing skeleton 221 includes, but is are not limited to, a rod shape, a block shape, a sheet shape, etc. In some embodiments of the present disclosure, the reinforcing skeleton 221 includes a plurality of reinforcing ribs arranged at intervals along a sliding direction of the sliding plate 20. Since there is an interval between adjacent two reinforcing ribs, the interval is equivalent to providing a certain deformation space for the flexible section 22, ensuring that the flexible section 22 is capable of being smoothly deformed and realizing smooth sliding when butted with the second guide rail 13. Moreover, after arranging the plurality of reinforcing ribs, they may also play a structure strengthening role for the flexible layer 222, thus preventing the flexible layer 222 from being excessively deformed and hence detached from the first guide rail or the second guide rail 13 due to its softer material.

In some embodiments, the flexible section 22 has a first side surface 201 extending along the sliding direction of the sliding plate 20, and the first side surface 201 faces away from or faces the first surface 11. The first side surface 201 is provided with a deforming groove 202 that may provide a deformation space for the flexible section 22 when the flexible section 22 generates deformation, thus preventing the flexible section 22 from being twisted and detached from the second guide rail 13. The shape of the deforming groove 202 includes, but is not limited to, an elongated shape, a circle shape, an ellipse shape, a triangle shape, a square shape, etc. One or more deforming grooves 202 may be provided. When a plurality of deforming grooves 202 are provided, the plurality of deforming grooves 202 may be distributed at intervals along the sliding direction of the sliding plate 20, or the plurality of deforming grooves 202 may be arranged in a rectangular array, etc.

For example, the plurality of deforming grooves 202 are distributed at intervals along the sliding direction of the sliding plate 20, and a convex portion 203 is formed between adjacent two deforming grooves 202, so that a plurality of convex portions 203 arranged at intervals are formed along the sliding direction of the sliding plate 20. In this embodiment, the convex portion 203 is in a shape of a long strip, and has a length direction perpendicular to the sliding direction. The reinforcing ribs of the flexible section 22 are arranged corresponding to the convex portions 203, and each of the reinforcing ribs corresponds to one convex portion 203. By arranging the reinforcing rib at a position corresponding to the convex portion 203, a wall thickness of the convex portion 203 is larger, and thus the reinforcing rib may be better wrapped. The deforming grooves 202 on two sides of the convex portion 203 may provide a certain deformation space for the flexible section 22, and when the flexible section 22 is extruded, a distance between adjacent two convex portions 203 may be compressed and reduced.

In the embodiment of the present disclosure, the fixed section 21 is integrated with the flexible section 22 by injection molding. For example, the fixed section 21 may adopt a rigid plastic cement structure, the flexible layer 222 of the flexible section 22 adopts a soft plastic cement structure, and the two are integrated by injection molding. Or, the fixed section 21 and the flexible section 22 may also be fixed by means of insertion, buckle connection, screw connection, bonding, etc.

The shapes of the fixed section 21 and the flexible section 22 include, but are not limited to, a shape of a long strip plate or a square plate. For example, the fixed section 21 is in a shape of a rectangular plate, and has a length direction along the sliding direction; and the flexible section 22 is in a shape of a rectangular plate, and has a length direction perpendicular to the sliding direction, and a width direction along the sliding direction.

In order to ensure that the sliding plate 20 slides more smoothly, two tracks may be arranged corresponding to the sliding plate 20. The two tracks are arranged at intervals in a direction perpendicular to the sliding direction, and each of the two tracks includes the first guide rail and the second guide rail 13. In some embodiments, the sliding plate 20 may also be provided with a sliding groove 204 to be butted with the track.

In some embodiments, the safety belt sliding assembly further includes a lower decorative plate 30 arranged on the second surface 12, the upper decorative plate 10 has an overlapping area overlapping with the lower decorative plate 30, the first guide rail is arranged outside the overlapping area, and the second guide rail 13 is arranged in the overlapping area. By arranging the second guide rail 13 in the overlapping area, when the sliding plate 20 slides to the overlapping area, it is capable of sliding in a direction away running from the first surface 11, so as to avoid interference with the overlapping area, thus increasing the sliding space of the sliding plate 20.

An embodiment of the present disclosure further provides a vehicle, which includes a safety belt sliding assembly, and a sliding plate 20 of the safety belt sliding assembly is connected with a safety belt. The specific structure of the safety belt sliding assembly is referred to the above embodiments, and is not repeated here.

Finally, it should be noted that the above embodiments are only used to illustrate the technical solution of the embodiments of the present disclosure, but not to limit the same. Although the embodiments of the present disclosure have be explained in detail with reference to the aforementioned embodiments, those skilled in the art should understand that they can still modify the technical solutions mentioned in the aforementioned embodiments, or equivalently replace part of the technical features thereof, and these modifications or replacements do not make the essence of the corresponding technical solutions deviate from the spirit and scope of the technical solutions in the embodiments of the present disclosure.

## Claims

1. A safety belt sliding assembly, comprising:
an upper decorative plate having a first surface, wherein the first surface is provided with a first guide rail and a second guide rail connected to each other, and the second guide rail is inclined in a direction running away from the first guide rail and in a direction facing away from the first surface; and
a sliding plate comprising a fixed section and a flexible section connected to each other, wherein the fixed section and the flexible section are slidably fitted with the first guide rail, respectively, and the flexible section is configured to slide to the second guide rail and generate deformation.

2. The safety belt sliding assembly according to claim 1, wherein the flexible section comprises a reinforcing skeleton and a flexible layer connected to each other.

3. The safety belt sliding assembly according to claim 2, wherein the reinforcing skeleton is embedded inside the flexible layer.

4. The safety belt sliding assembly according to claim 2 or 3, wherein the reinforcing skeleton is bonded with the flexible layer; or, the flexible layer is a soft rubber layer, and the reinforcing skeleton is integrated with the flexible layer by injection molding.

5. The safety belt sliding assembly according to any one of claims 2 to 4, wherein the reinforcing skeleton comprises a plurality of reinforcing ribs arranged at intervals along a sliding direction of the sliding plate.

6. The safety belt sliding assembly according to any one of claims 1 to 5, wherein the flexible section has a first side surface, the first side surface faces away from or faces the first surface, and the first side surface is provided with a deforming groove.

7. The safety belt sliding assembly according to claim 6, wherein the first side surface is provided with a plurality of deforming grooves, the plurality of deforming grooves are distributed at intervals along a sliding direction of the sliding plate, a convex portion is formed between adjacent two deforming grooves, the reinforcing ribs of the flexible section are arranged corresponding to the convex portions, and each reinforcing rib corresponds to one convex portion.

8. The safety belt sliding assembly according to any one of claims 1 to 7, wherein the second guide rail is an arc-shaped guide rail.

9. The safety belt sliding assembly according to any one of claims 1 to 8, wherein the upper decorative plate has a second surface facing away from the first surface; and
the safety belt sliding assembly further comprises a lower decorative plate arranged on the second surface, the upper decorative plate has an overlapping area overlapping with the lower decorative plate, the first guide rail is arranged outside the overlapping area, and the second guide rail is arranged in the overlapping area.

10. A vehicle, comprising a safety belt sliding assembly according to any one of claims 1-9.
